# EUROPEAN PATENT SPECIFICATION

(11) **EP 1 967 265 B1**
(45) Date of publication and mention of the grant of the patent: **19.10.2016**
(21) Application number: 06834046.2
(22) Date of filing: 05.12.2006
(51) Int. Cl.: B01J 35/04, B01D 39/00, B01D 39/20, B01D 46/24, B01D 53/86, B01D 53/94, B01J 23/42, B01J 37/00, B01J 37/02, F01N 3/022, F01N 3/28, B01D 46/00

(54) **METHOD OF PRODUCING A honeycomb structure body**
HERSTELLUNGSVERFAHREN FÜR einen WABENSTRUKTURKÖRPER
PROCÉDÉ DE PRODUCTION d'un CORPS À STRUCTURE EN NID D'ABEILLES

(30) Priority: 07.12.2005 JP 2005354146
(43) Date of publication of application: 10.09.2008
(73) Proprietor: NGK Insulators, Ltd., Nagoya-shi, Aichi 467-8530 (JP)
(72) Inventor: KASAI, Yoshiyuki, Nagoya-shi, Aichi 4678530 (JP); YAMADA, Toshio, Nagoya-shi, Aichi 4678530 (JP); MAKINO, Mikio, Nagoya-shi, Aichi 4678530 (JP); AOKI, Yoichi, Nagoya-shi, Aichi 4678530 (JP)
(74) Representative: Naylor, Matthew John
(86) International application number: PCT/JP2006/324291
(87) International publication number: WO 2007/066671

(56) References cited:
- EP-A1- 1 484 100
- EP-A1- 1 484 482
- EP-A1- 1 541 215
- EP-A2- 1 293 241
- EP-A2- 1 580 181
- WO-A1-03/011427
- WO-A1-03/072913
- JP-A- 58 045 715
- JP-A- 2003 126 629
- JP-A- 2003 269 132
- JP-A- 2005 125 209

## Description

### Technical Field

The present invention relates to a method of producing a honeycomb structure More specifically, the present invention relates to production of a honeycomb structure having excellent thermal dispersibility upon heating and being effectively inhibited from being damaged due to thermal stress.

### Background Art

The need of removing particulate matter and harmful substances in exhaust gas discharged from an internal combustion engine, a boiler, or the like, is growing in consideration of influence on environment. In particular, the regulations on removal of particulate matter (hereinbelow sometimes referred to as PM) discharged from diesel engines tend to become severe both in Japan and Western countries, and use of a honeycomb structure as a trapping filter (hereinbelow sometimes referred to as a DPF) for removing PM is spotlighted.

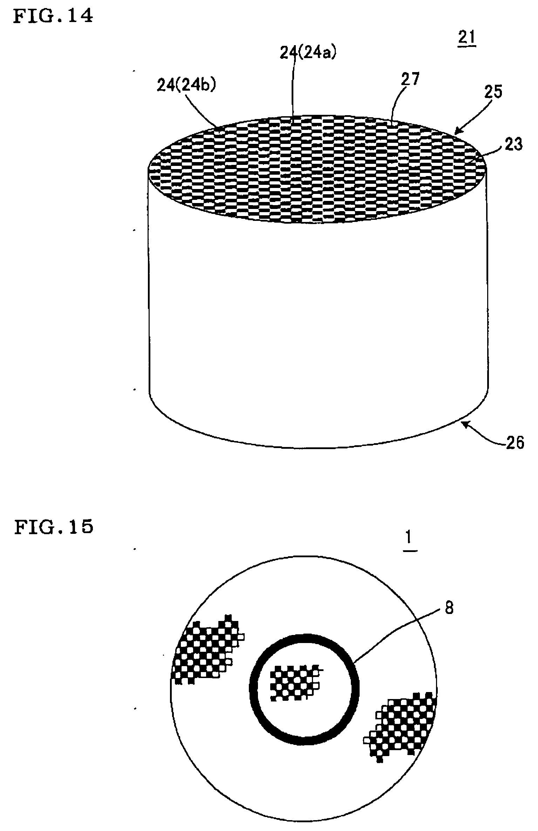

Generally, as shown in Fig. 14, a honeycomb structure 21 is provided with porous partition walls 23 disposed so as to form a plurality of cells 24 functioning as fluid passages of exhaust gas between two end faces and having a large number of pores and plugging portions 27 disposed so as to alternately plug one of the open end portions of each cell 24 in the two end faces. In the honeycomb structure 21 having such a structure, fluid such as gas and liquid flows into the cells 24b from the open end portions 25 on the inflow side without being plugged by the plugging portions 27, passes through the porous partition walls 23, and discharged from the adjacent cells 24a (plugged at the open end portion 25 on the inflow side and open at the open end portions 26 on the outflow side). At this time, the partition walls 23 serve as a substantial filter, and, for example, carbon particulate matter discharged from diesel engines accumulates on the partition walls 23. Such a honeycomb structure 21 has an uneven temperature distribution in the honeycomb structure 21 due to a rapid temperature change or local heat generation and has a problem of having cracks and the like. In particular, when such a honeycomb structure is used as a DPF, it is necessary to regenerate the DPF by combusting and removing the carbon particulate matter accumulating thereon. Since a local high temperature is inevitable at this time, large thermal stress generates, thereby damages are easily caused.

Therefore, there have been disclosed a method where segments obtained by dividing a honeycomb structure are bonded with a bonding agent (see, e.g., Patent Document 1) and a honeycomb structure having a flow passage separator formed therein (see, e.g., Patent Document 2)
Patent Document 1: JP-B-61-51240
Patent Document 2: JP-A-2003-161136

The method disclosed in the Patent Document 1 is to suppress local temperature rise by integrating the segments, which is an effective method to a certain degree. However, since it has a problem of requiring a step of integrating the segments to produce one honeycomb structure after a large number of segments are produced, this has not been necessarily recognized as a sufficiently satisfying method. In addition, in the honeycomb structure disclosed in the Patent Document 2, the effect in inhibiting damages due to thermal stress is not necessarily sufficiently satisfied. In particular, there is a case that rise of temperature and pressure loss and the like cannot effectively be inhibited depending on a flow passage separator-imparting ratio.

EP 1541215 A shows a honeycomb filter in which cells of the honeycomb structure are plugged alternately at opposite ends by first plugging members in a checkered flag manner at each end. Additional plugging members plug openings of the cells which are not plugged by the first plugging members at one or the other of the end faces. EP 1484100 A, JP A 58 45715, EP 1580181 A and EP 1293241 A show similar honeycomb filters in which the additional plugging members are longer than the first plugging members.

EP A 1484482 shows a honeycomb filter in which cells of the honeycomb structure are plugged alternately at opposite ends by plugging members in a checkered flag manner at each end. The length of the plugging members increases towards the periphery of the honeycomb structure.

The present invention has been made in view of the aforementioned problems and aims to provide a method of producing a honeycomb structure having excellent thermal dispersibility upon heating and being effectively inhibited from being damaged due to thermal stress.

### Disclosure of the Invention

According to the present invention, there are provided a method of producing a honeycomb structure, as set out in claim 1.

In the honeycomb structure made according to the invention, preferably the disposition length in the axial direction of the additional plugging portions is longer than that in the axial direction of the first plugging portions.

Preferably, the cross-sectional shapes in the direction perpendicular to the axial direction of each of the additional plugging portions are contiguous one another to form a predetermined series of shapes.

Preferably, disposition density per unit area in a cross section perpendicular to the axial direction of the additional plugging portions is 1 to 40% of that of the plugging portion.

Preferably, the cross-sectional shape in the direction perpendicular to the axial direction of the cells is a shape of a combination of a quadrangle and an octagon.

Preferably, the partition walls contains as a main crystal at least one selected from the group consisting of cordierite, mullite, alumina, silicon carbide (SiC), silicon nitride, aluminum titanate, lithium aluminum silicate (LAS), and zirconium phosphate.

Preferably the additional plugging portions are constituted of the same material as that of the partition walls.

Preferably the heat capacity per unit length of the additional plugging portions is 1.2 to 10 times larger than that of the partition walls.

Preferably the heat capacity per unit volume of the additional plugging portions is 1.2 to 10 times larger than that of the partition walls.

Preferably the thermal conductivity in the axial direction of the additional plugging portions is 1.2 to 10 times larger than that of the partition walls.

Preferably the thermal conductivity in the axial direction of the additional plugging portions is 1.2 to 5 times larger than that in a direction perpendicular to the axial direction.

Preferably the disposition length in the axial direction of the additional plugging portions is 0.1 to 0.8 of the entire length of the honeycomb structure and 1.5 times or more larger than that in the axial direction of the first plugging portions.

Preferably, the average thermal expansion coefficient in the axial direction at 40 to 800°C is 2.0 × 10⁻⁶/°C or less.

Preferably the partition walls have a unitary structure.

The honeycomb structure made according to the invention may be used for the exhaust gas is discharged from an internal combustion engine.

A honeycomb catalyst body may be obtained by loading a catalyst capable of purifying the exhaust gas on at least a part of the inner surfaces and/or the inner surfaces of the pores of the partition walls of a honeycomb structure made according to the invention.

[17] An exhaust gas treatment device may be provided with a honeycomb structure made according to the invention or a honeycomb catalyst body described just above.

In the method of producing a honeycomb structure according to the invention, preferably the openings corresponding with the additional plugging portions are larger than the openings corresponding with the first plugging portions in the mask and/or the film.

Preferably the independent materials are filled into the first plugging portions and additional plugging portions by a press-in technique.

Alternatively, the independent materials are filled into the first plugging portions and additional plugging portions by a suction technique.

Preferably the material which becomes the first plugging portions and the material which becomes the additional plugging portions of the cells are separately filled in cells with each being filled one or more times.

Preferably firing is performed after the plugging portions and the additional plugging portions are formed.

Since a honeycomb structure produced by the present invention has excellent thermal dispersibility upon heating and therefore is effectively inhibited from being damaged due to thermal stress. In addition, the method of producing a honeycomb structure of the present invention enables production of the honeycomb structure simply at low costs.

### Brief Description of the Drawings

[Fig. 1] Fig. 1 is a perspective view schematically showing an embodiment of a honeycomb structure made according to the present invention.
[Fig. 2] Fig. 2 is a plan view schematically showing one end face of the honeycomb structure shown in Fig. 1.
[Fig. 3] Fig. 3 is a plan view schematically showing the other end face of the honeycomb structure shown in Fig. 1.
[Fig. 4] Fig. 4 is a cross-sectional view along the A-A line of the honeycomb structure shown in Fig. 2.
[Fig. 5] Fig. 5 is a plan view showing an example of a cross-sectional shape (a contiguous series of shapes) in a direction perpendicular to the axial direction of the additional plugging portions in a honeycomb structure which may be made according to the present invention.
[Fig. 6] Fig. 6 is a plan view showing an example of a cross-sectional shape (a contiguous series of shapes) in a direction perpendicular to the axial direction of the additional plugging portions in another honeycomb structure which may be made according to the present invention.
[Fig. 7] Fig. 7 is a plan view showing an example of a cross-sectional shape (a contiguous series of shapes) in a direction perpendicular to the axial direction of the additional plugging portions in yet another honeycomb structure which may be made according to the present invention.
[Fig. 8] Fig. 8 is a plan view showing an example of a cross-sectional shape (a contiguous series of shapes) in a direction perpendicular to the axial direction of the additional plugging portions in a further honeycomb structure which may be made according to the present invention.
[Fig. 9] Fig. 9 is a plan view showing an example of a cross-sectional shape (a contiguous series of shapes) in a direction perpendicular to the axial direction of the additional plugging portions in another honeycomb structure which may be made according to the present invention.
[Fig. 10] Fig. 10 is a plan view showing an example of a cross-sectional shape (a contiguous series of shapes) in a direction perpendicular to the axial direction of the additional plugging portions in another honeycomb structure which may be made according to the present invention.
[Fig. 11] Fig. 11 is a plan view showing an example of a cross-sectional shape (a contiguous series of shapes) in a direction perpendicular to the axial direction of the additional plugging portions in another honeycomb structure which may be made according to the present invention.
[Fig. 12] Fig. 12 is a plan view showing an example of a cross-sectional shape (a contiguous series of shapes) in a direction perpendicular to the axial direction of the additional plugging portions in another honeycomb structure which may be made according to the present invention.
[Fig. 13] Fig. 13 is a plan view showing an example of a cross-sectional shape (a contiguous series of shapes) in a direction perpendicular to the axial direction of the additional plugging portions in another honeycomb structure which may be made according to the present invention.
[Fig. 14] Fig. 14 is a perspective view schematically showing a conventional honeycomb structure.
[Fig. 15] Fig. 15 is a plan view showing an example of a cross-sectional shape (a contiguous series of shapes) in a direction perpendicular to the axial direction of the additional plugging portions in another honeycomb structure which may be made according to the present invention.
[Fig. 16] Fig. 16 is a plan view showing an example of a cell shape in a direction perpendicular to the axial direction of a honeycomb structure which may be made by the present invention before the first plugging portions and the additional plugging portions are disposed.

### Description of Reference Numerals

- 1:: honeycomb structure
- 3:: partition wall
- 4:: cell
- 4a:: cell
- 4b:: cell
- 4c:: plugged cell
- 5:: open end portion
- 6a:: end face on one side
- 6b:: end face on the other side
- 7:: plugging portion (first plugging portion)
- 8:: additional plugging portion
- 11:: outer peripheral face
- 21:: honeycomb structure
- 23:: partition wall
- 24:: cell
- 24a:: cell
- 24b:: cell
- 25:: open end portion on inflow side
- 26:: open end portion on outflow side
- 27:: plugging portion

### Best Mode for Carrying out the Invention

Embodiments of the production method of a honeycomb structure of the present invention will hereinbelow be described specifically with referring to drawings.

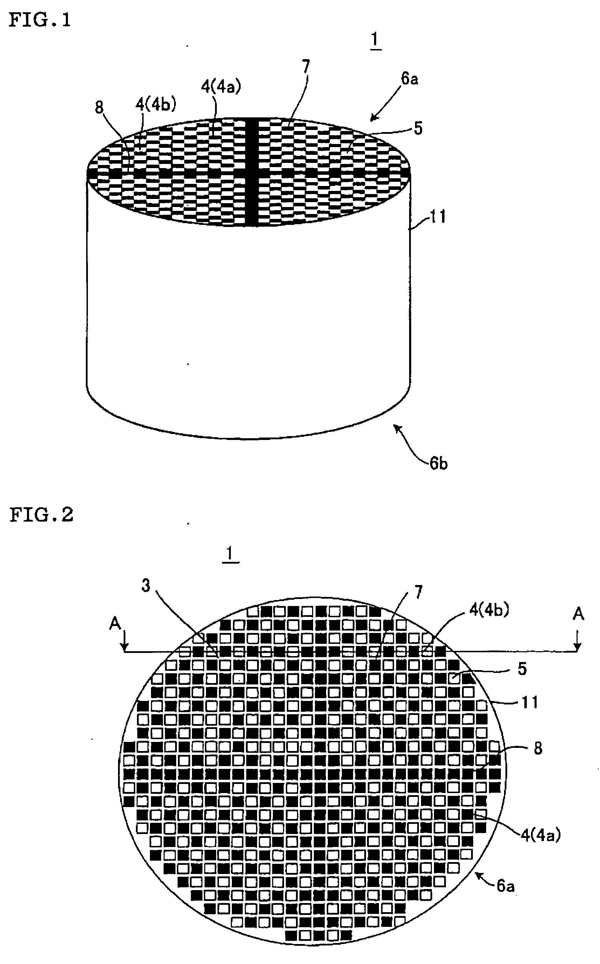

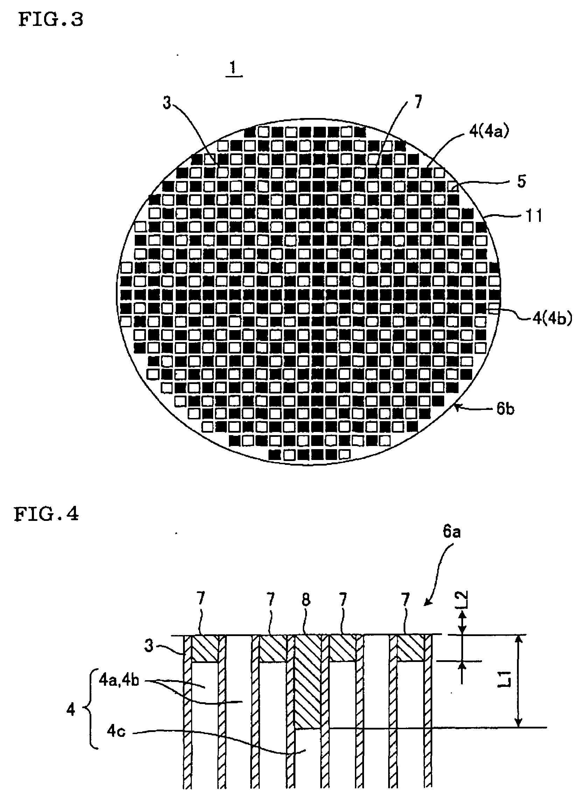

Fig. 1 is a perspective view schematically showing an embodiment of a honeycomb structure made by the present invention, Fig. 2 is a plan view schematically showing one end face of the honeycomb structure shown in Fig. 1, and Fig. 3 is a plan view schematically showing the other end face of the honeycomb structure shown in Fig. 1. Fig. 4 is a cross-sectional view in the vicinity of the additional plugging portion along the A-A line of the honeycomb structure shown in Fig. 2. As shown in Figs. 1 to 4, a honeycomb structure 1 is provided with porous partition walls 3 disposed so as to form a plurality of cells 4 (4a and 4b) functioning as fluid passages of exhaust gas between two end faces 6a, 6b and having a large number of pores, and first plugging portions 7 disposed so as to alternately plug one of the open end portions 5 of each of the cells 4a and 4b on the two end faces 6a and 6b. Fluid flowing into the cells 4 can flow out via the partition walls 3 functioning as a filtration layer. The honeycomb structure 1 is characterized in that additional plugging portions 8 are further disposed in the open end portions (unplugged open end portions) 5 having no plugging portion 7 disposed therein of the cells in such a manner that the additional plugging portions 8 stop inflow of a part of the exhaust gas to the unplugged open end portions 5, and disposition length (L1) in an axial direction of the additional plugging portions 8 is different from disposition length (L2) in the axial direction of the plugging portions 7.

The additional plugging portions 8 are preferably disposed on both the end faces 6a and 6b (see Figs. 2 and 3) though they are disposed on at least one of the end faces 6a and 6b. In addition, it is not necessary that the additional plugging portions have a structure of completely stopping inflow of exhaust gas, and the additional plugging portions may have a hole or a gap where exhaust gas can pass in the central portion or the outer peripheral portion in contact with partition walls of the additional plugging portion.

In addition, regarding the additional plugging portions 8, "disposition length (L1) in an axial direction of the additional plugging portions 8 is different from disposition length (L2) in the axial direction of the plugging portions 7" means that "the additional plugging portions are longer or shorter than the plugging portions".

Thus, since a honeycomb structure 1 made by the present invention is provided with additional plugging portions 8, there is formed a cell (hereinbelow sometimes referred to as a "plugged cell 4c) plugged in both the open end portion 5 on one end face 6a side, for example, the open end portion 5 on the inlet side and the open end portion 5 on the other end face 6b side, for example, the open end portion 5 on the outlet side. By the plugged cell 4c, thermal dispersibility upon heating is enhanced to effectively suppress damages due to thermal stress. Conventionally, when a honeycomb structure 1 is used as a DPF, and carbon particulate matter and the like trapped by the partition walls 3 is combusted for DPF regeneration, combustion heat upon regeneration tends to concentrate in the vicinity of the central axis. Therefore, in the case that the quantity of carbon particulate matter trapped by the DPF is large, breakage or melting of DPF may be caused due to rapid temperature rise. The cell 4 having the additional plugging portion 8 formed therein can reduce the amount of carbon particulate matter accumulating on the partition walls 3 and reduce heat generated upon regeneration of the DPF. Further, since carbon particulate matter or the like is not trapped in the plugged cell 4c, combustion heat is not generated upon regeneration, and the temperature therein is lower than the other portion where combustion is actually performed. The plugged cell 4c absorbs the combustion heat generated in the other portion and contributes to thermal dispersion to suppress rapid combustion. Therefore, it is preferable to dispose the additional plugging portion 8 in a cell where temperature particularly rapidly rises (e.g., vicinity of the central portion) in the DPF to form the plugged cell 4c.

In addition, as shown in Fig. 4, since disposition length (L1) in an axial direction of the additional plugging portions 8 is constituted so as to be different from disposition length (L2) in the axial direction of the plugging portions 7 in the honeycomb structure 1 made by the present invention, quantity of heat absorption can be made larger or smaller than the plugging portion arbitrarily.

In the honeycomb structure 1, it is preferable that the disposition length in the axial direction of the additional plugging portions 8 is longer than that in the axial direction of the plugging portions 7. This constitution makes temperature rise upon regeneration lower.

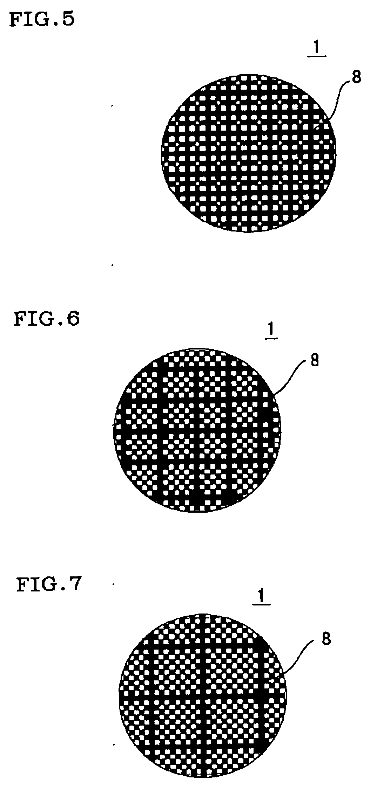

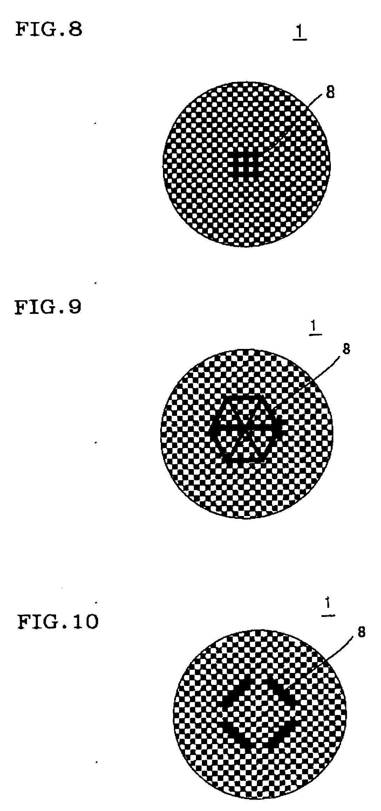

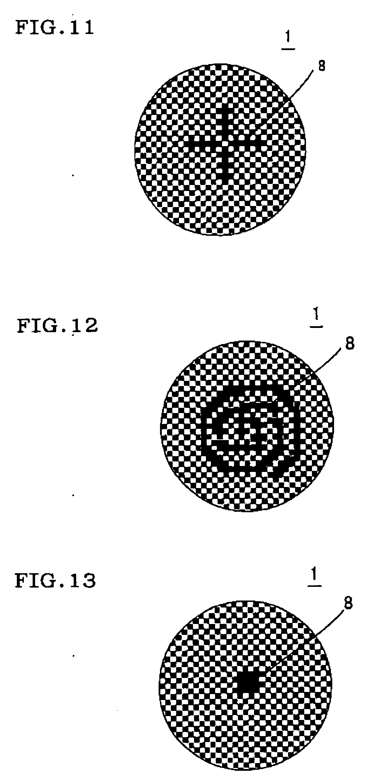

In addition, in the honeycomb structure 1, it is preferable that cross-sectional shapes in the direction perpendicular to the axial direction of each of the additional plugging portions 8 (a plugging portion 7 may be interposed) are contiguous one another to form a predetermined series of shapes. In the honeycomb structure 1 shown in Figs. 1 to 3, the additional plugging portions 8 are disposed in a crosswise shape (with a plugging portion 7 being interposed). However, there is no particular limitation on the predetermined series of shapes of the additional plugging portions 8, and the shape may be a lattice-like shape as shown in Figs. 5 to 7, a polygonal shape such as a quadrangular shape or a shape obtained by combining such polygonal shapes, for example, as shown in Figs. 8 and 9, or a shape as shown in Figs. 10 to 13. By such a configuration, for example, by plugged cells 4c of a contiguous predetermined series of shapes, the honeycomb structure 1 can be divided in such a manner that each region has a predetermined size. Therefore, generated heat upon combusting carbon particulate matter and the like can be dispersed in each region, thereby suppressing chained combustion due to heat generation to effectively inhibit temperature from rising rapidly.

Incidentally, "contiguous" in "contiguous one another to form a predetermined series of shapes" means, for example, a state that a line linking the additional plugging portions 8 mutually present in the nearest position (a plugging portion 7 may be interposed) forms a straight line or a curve, for example, in an end face 6a of the honeycomb structure 1. In the case that additional plugging portions 8 are contiguously formed (plugging portion 7 may be interposed) as shown in Figs. 2 and 3, it is preferable to form a region contiguously surrounded by additional plugging portions 8 or a region (hereinbelow sometimes referred to as a "segment region") contiguously surrounded by an outer peripheral face 11 and additional plugging portions 8 of the honeycomb structure 1 when additional plugging portions 8 are disposed up to the outer peripheral face 11 side of the honeycomb structure 1. There may be a plurality of segment regions or one segment region formed in one end face. Incidentally, in the case that additional plugging portions 8 are not contiguous before they reaches the outer peripheral face 11 of the honeycomb structure 1 in one end face 6a of the honeycomb structure 1, the segment region can be determined by assuming the extended line.

In the honeycomb structure 1, disposition density per unit area in a cross section perpendicular to the axial direction of the additional plugging portions 8 is preferably 1 to 45% of that of the plugging portion 7, and more preferably 2 to 20%. When it is below 1%, a sufficient thermal dispersion effect may not be obtained. When it is above 45%, pressure loss may become too large. Since rise in pressure loss does not become so large when it is 20% or less, it is more preferable.

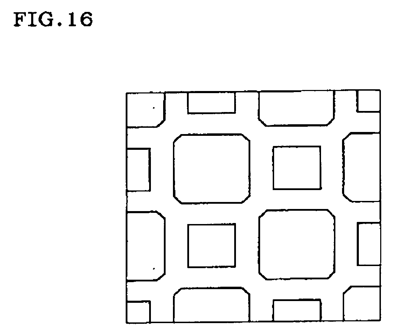

In addition, in the honeycomb structure 1, it is preferable that a cross-sectional shape in the direction perpendicular to the axial direction of the cells 4 is a shape of a combination of a quadrangle and an octagon alternately as shown in Fig. 16. This configuration can make volume on the exhaust gas upstream side larger than that on the exhaust gas down stream side with respect to the partition walls of the honeycomb structure, and therefore the accumulation amount of PM and ash can be increased. Incidentally, contrary to Fig. 16, quadrangular cells may have a cross-sectional area larger than that of octagonal cells. In addition, according to its application, the volume on the exhaust gas upstream side may be made smaller than that on the exhaust gas down stream side with respect to the partition walls of the honeycomb structure. The ratio of a cross-sectional area of an octagonal cell to that of a quadrangular cell may arbitrarily be determined. For example, it may be in the range from 1.3 to 5, or in the range from 1/5 to 1/1.3 (inverse numbers).

In addition, in the honeycomb structure 1, it is preferable that the partition walls 3 contains as a main crystal at least one selected from the group consisting of cordierite, mullite, alumina, silicon carbide (SiC), silicon nitride, aluminum titanate, lithium aluminum silicate (LAS), and zirconium phosphate. Such a constitution enables to obtain a honeycomb structure excellent in durability.

Further, in the honeycomb structure 1, the additional plugging portions 8 are preferably constituted of the same material as that of the partition walls 3. Since characteristics such as thermal expansion coefficient become almost the same by such a constitution, damages at high temperature or detachment of an additional plugging portion is hardly caused, thereby obtaining good durability. The same can be applied to a material for the plugging portions 7.

Further, in the honeycomb structure 1, a heat capacity per unit length of the additional plugging portions 8 is preferably 1.2 to 10 times, more preferably 4 to 10 times, larger than that of the partition walls 3. When it is below 1.2 times, a heat absorption amount is small, and temperature may become high upon regeneration. When it is above 10 times, a heat absorption amount is too large, and sometimes heat quantity required for regeneration cannot be secured. This constitution enables to obtain optimum additional plugging portions. Incidentally, in order to adjust the heat capacity per unit length of the additional plugging portions 8 so that the heat capacity may satisfy the above conditions, it is preferable to adjust the kind of the raw material, amount of a pore former and the like added to the raw material upon production of the additional plugging portions 8.

Further, in the honeycomb structure 1, a heat capacity per unit volume of the additional plugging portions 8 is preferably 1.2 to 10 times, more preferably 4 to 10 times, larger than that of the partition walls 3. When it is below 1.2 times, a heat absorption amount is small, and temperature may become high upon regeneration. When it is above 10 times, a heat absorption amount is too large, and sometimes heat quantity required for regeneration cannot be secured. This constitution enables to obtain optimum additional plugging portions. Also, in this case, it is preferable to adjust the kind of the raw material, amount of a pore former and the like added to the raw material upon production of the additional plugging portions 8.

Further, in the honeycomb structure 1, thermal conductivity in the axial direction of the additional plugging portions 8 is preferably 1.2 to 10 times, more preferably 2 to 4 times, larger than that of the partition walls 3. When it is below 1.2 times, thermal diffusion becomes insufficient, and temperature becomes too high in the vicinity of the additional plugging portions. When it is above 10 times, the temperature difference between the additional plugging portions and the partition walls becomes too large upon heating or cooling, and the additional plugging portions may be prone to be detached due to the thermal expansion difference. This constitution enables to obtain a honeycomb structure excellent in durability.

Further, in the honeycomb structure 1, thermal conductivity in the axial direction of the additional plugging portions 8 is preferably 1.2 to 5 times, more preferably 3 to 5 times, larger than that in a direction perpendicular to the axial direction. When it is below 1.2 times, thermal diffusion in the additional plugging portions becomes insufficient, and temperature may become too high in the vicinity of the additional plugging portions. When it is above 5 times, the temperature difference between the additional plugging portions and the partition walls becomes too large upon heating or cooling, and the additional plugging portions may be prone to be detached due to the thermal expansion difference. This constitution enables to obtain a honeycomb structure excellent in durability.

Further, in the honeycomb structure 1, it is preferable that the disposition length in the axial direction of the additional plugging portions 8 is 0.1 to 0.8 of the entire length of the honeycomb structure and 1.5 times or more larger than that in the axial direction of the plugging portions 7 and more preferable that the disposition length in the axial direction of the additional plugging portions 8 is 0.5 to 0.8 of the entire length and 3 times or more larger than that in the axial direction of the plugging portions 7. When it is out of the range of 0.1 to 0.8 of the entire length of the honeycomb structure and the range of 1.5 times or more larger than that in the axial direction of the plugging portions 7, temperature of the honeycomb structure may become too high or too low upon regeneration. This configuration enables to obtain a honeycomb structure excellent in durability.

Further, in a honeycomb structure 1, an average thermal expansion coefficient in the axial direction at 40 to 800°C is preferably 2.0 × 10⁻⁶/°C or less, and more preferably 1.0 × 10⁻⁶/°C or less. When it is above 2.0 × 10⁻⁶/°C, damages such as cracks may be caused in the honeycomb structure due to thermal stress. By such a configuration, when it is used as a filter, deformation or generation of cracks due to a temperature difference in each internal portion can effectively be inhibited upon heating for regeneration.

Further, in the honeycomb structure 1, the partition walls 3 have a unitary structure. That is, it is preferable to obtain a unitarily formed honeycomb structure instead of bonding the segments obtained by dividing the partition walls 3 into a plurality of pieces with a bonding agent. Such a configuration enables to enhance mechanical strength and suppress the production costs to be low.

Embodiments of the production method of a honeycomb structure of the present invention will hereinbelow be described. The present method is a method of producing a honeycomb structure comprising the steps of: disposing a mask and/or a film having openings of a predetermined size on two end faces of a honeycomb formed body obtained by forming clay into a honeycomb shape or a honeycomb structure obtained by firing the honeycomb formed body, and filling independent materials into portions which become the first plugging portions and the additional plugging portions of the cells to form the first plugging portions and the additional plugging portions; and the method is characterized in that the mask and/or the film have/has openings whose sizes are different between the openings corresponding with the additional plugging portions and the openings corresponding with the first plugging portions. Such a constitution enables to produce the aforementioned honeycomb structure 1 simply at low costs.

Incidentally, in the present embodiment, preparation of clay, production of a honeycomb formed body, drying, firing, and the like, can be conducted according to a conventional production method of a honeycomb structure, except formation of the first plugging portions and additional plugging portions.

In the present embodiment, it is preferable that the openings corresponding with the additional plugging portions are larger than the openings corresponding with the plugging portions in the mask and/or the film. Such a configuration enables to easily fill the material into the additional plugging portions when the additional plugging portions are longer than the first plugging portions.

It is preferable that independent materials are filled into portions which become the first plugging portions and the additional plugging portions of the cells by a press-in technique. Such a constitution enables to easily set up the length of the additional plugging portion.

Further, in the present embodiment, it is preferable that independent materials are filled into the first plugging portions and additional plugging portions by a suction technique where each material is sucked in from the opposite side of the cells. Such a constitution enables to easily produce long additional plugging portions.

Further, in the present embodiment, a material which becomes the first plugging portions and a material which becomes the additional plugging portions of the cells are separately filled in cells with each being filled preferably one or more times, and preferably two or more times. Such a constitution enables to more easily produce long additional plugging portions.

Further, in the present embodiment, it is preferable that firing is performed after the first plugging portions and the additional plugging portions are formed. Such a structure makes adhesion of the first plugging portions and the additional plugging portions stronger and can reduce detachment due to vibrations or the like.

In a honeycomb catalyst body made by the present invention, a catalyst capable of purifying exhaust gas is loaded on at least a part of the inner surfaces and/or the inner surfaces of the pores of the partition walls 3 of the aforementioned honeycomb structure. Examples of the catalyst include (1) a gasoline engine exhaust gas purification three way catalyst, (2) a gasoline engine or diesel engine exhaust gas purification oxidation catalyst, (3) a NOₓ selectively-reducing catalyst, and (4) a NOx adsorbent catalyst.

A gasoline engine exhaust gas purification three way catalyst includes a carrier coat covering the partition walls of the honeycomb structure (honeycomb carrier) and a noble metal dispersed and loaded inside the carrier coat. The carrier coat is constituted of, for example, active alumina. In addition, suitable examples of the noble metal dispersed and loaded inside the carrier coat include Pt, Rh, or Pd, and a combination thereof. The carrier coat contains a compound, for example, cerium oxide, zirconia oxide or silica or a mixture thereof. Incidentally, the total amount of the noble metals is preferably 0.17 to 7.07 g per liter of a volume of the honeycomb structure.

A gasoline engine or diesel engine exhaust gas purification oxidation catalyst contains a noble metal. As the noble metal, at least one kind selected from the group consisting of Pt, Rh, and Pd is preferable. Incidentally, the total amount of the noble metals is preferably 0.17 to 7.07 g per liter of a volume of the honeycomb structure. In addition, the NOₓ selective reduction SCR catalyst contains at least one kind selected from the group consisting of metal-substituted zeolite, vanadium, titania, tungsten oxide, silver, and alumina.

The NOₓ adsorbent catalyst contains an alkali metal and/or an alkali earth metal. Examples of the alkali metal include K, Na, and Li. Examples of the alkali earth metal include Ca. Incidentally, the total amount of K, Na, Li, and Ca is preferably 5 g or more per liter of the volume of the honeycomb structure.

A honeycomb catalyst body made by the present invention can be produced by loading a catalyst on the aforementioned honeycomb structure utilizing a production method according to a conventionally known method. To be concrete,
in the first place, catalyst slurry containing a catalyst is prepared. Then, the catalyst slurry is coated on the surfaces of the pores of the partition walls of the honeycomb structure by a suction technique or the like. Thereafter, a honeycomb catalyst body of the present invention can be produced by drying at room temperature or under heating conditions.

An exhaust gas treatment device may be provided with the aforementioned honeycomb structure and/or honeycomb catalyst and can effectively treat exhaust gas.

### Examples

The present invention will hereinbelow be described more concretely on the basis of Examples. However, the present invention is by no means limited to these Examples.

### (Example 1)

As the cordierite-forming material, talc, kaolin, alumina, and silica were adjusted at a compounding ratio for forming cordierite after firing. To the adjusted raw material were added a binder, a foamed resin as a pore former, a surfactant, and water, followed by mixing them to obtain clay. The clay was subjected to extrusion forming using a die for a partition wall thickness of 0.3 mm, a cell density of 46. 5 cell/cm², and a diameter of 144 mm after firing. Thus, a honeycomb formed body was produced. Incidentally, the pore former may suitably be changed depending on porosity required, and also the amounts of the binder and the surfactant may suitably be changed depending on the grain size or the like of the raw material to be used. The honeycomb formed body was cut to have a certain length, a film was bonded on one end face of the honeycomb structure, and openings were formed in a checkerwise pattern in order to form plugging portions as shown in Fig. 14. In addition, as shown in Fig. 15, in order to form additional plugging portions, openings were further formed in the film to have a circular shape. Since the openings may have any shape as long as they allow slurry of the plugging material to pass through, the shape may be a polygon such as a triangle and a quadrangle or a character such as @, B, D, Q and R besides a circle. In addition, the additional plugging portions having arbitrary depth can be obtained by increasing the diameter of openings by changing the size of openings formed in the film. The opening size can suitably be determined in accordance with the relation between the slurry viscosities of the material (plugging material) forming the plugging portions and the additional plugging portions. The plugging portions and the additional plugging portions before firing were formed by pressing the slurry of the plugging material into the honeycomb formed body having the film with openings in the state that the slurry was leveled to have a thickness of 2 to 10 mm. The length of the slurry pressed into the body is the factor determining the depth of the plugging portion and the additional plugging portion and can suitably be set up. As another method, after subjecting the film to opening-making in the checkerwise pattern and the additional plugging portions, the end face is immersed in the slurry of the plugging material, and the slurry is sucked from one side to form the plugging portions and the additional plugging portions. By firing the honeycomb formed body having the plugging portions and the additional plugging portions formed therein in such a method, there was obtained a water-flow type DPF having a diameter of 144 mm, a length of 152 mm, a disposition length (depth) of the plugging portions of 2 to 15 mm and a disposition length (depth) of the additional plugging portions of 16 to 100 mm on an open end portion on the inlet side, a disposition length of the plugging portions of 2 to 15 mm and a disposition length (depth) of the additional plugging portions of 15 to 120 mm on an open end portion on the outlet side, and a disposition density (%) of the additional plugging portion of 1 to 45%. Incidentally, the porosity was made to be 65% by adjusting a pore former. These are shown in Table 1 all together.

Platinum (Pt) was coated as a catalyst on the honeycomb structure (DPF) obtained above to obtain a honeycomb catalyst body. The obtained honeycomb catalyst body was subjected to canning and installed in an exhaust gas pipe of an engine in the state that an oxidation catalyst was mounted on the upstream side. After accumulating PM of 7.5 g/honeycomb catalyst body by conducting load adjustment of the engine, exhaust gas temperature was raised up to 700°C by postinjection, postinjection was stopped to obtain an idle state. The DPF serving as a sample was measured for the highest temperature upon regeneration and the rupture PM amount. The results are shown in Table 1. Here, the additional plugging density is shown by a ratio of the disposition density (number) per unit area in a cross section perpendicular to the axial direction of the additional plugging portions 8 to the disposition density (number) per unit area of the plugging portions 7. In addition, the additional plugging density was calculated in only one end face of the honeycomb structure, and, in the case that the additional plugging portions 8 are disposed on both the end faces, total of the additional plugging densities on both the end faces was defined as the additional plugging density of the honeycomb structure. Incidentally, the highest temperature upon regeneration and the rupture PM amount were measured as follows.

[Highest temperature upon regeneration] A sheathed thermocouple having an outer diameter of 0.5 mm was disposed in each portion of the honeycomb structure in such a manner that a temperature profile in the honeycomb structure upon PM regeneration can be monitored, and internal temperature in each portion of the honeycomb structure upon regeneration was measured by recording the highest temperature upon regeneration to regard the highest temperature among the temperatures measured as the highest temperature upon regeneration.

[Rupture PM amount] A PM accumulation amount was increased by about 0.5g to obtain a PM accumulation amount (rupture PM amount) per unit volume of the honeycomb structure when a rupture is caused in the honeycomb structure.

### (Examples 2 to 14)

The honeycomb catalyst bodies were obtained in the same manner as in Example 1 except for plugging depth, plugging depth of additional plugging portions, additional plugging density, and additional plugging disposition form. Disposition length (depth) of the plugging portions and disposition length (depth) of the additional plugging protions in the open end portion on the inlet side, disposition length (depth) of the plugging portions and disposition length (depth) of the additional plugging protions in the open end portion on the outlet side, additional plugging density, highest temperature upon regeneration, rupture PM amount, and additional plugging disposition form of each of the obtained honeycomb catalyst bodies are shown in Table 1. Incidentally, an "additional plugging disposition form" means disposition form of additional plugging and does not mean production in completely the same shape as the figure.

Comparative Examples 1 to 3 and Examples A and B.

The honeycomb catalysts were obtained in the same manner as in Example 1 except for plugging depth, depth and presence/absence of additional plugging, additional plugging density, and additional plugging disposition form. Disposition length (depth) of the plugging portions and disposition length (depth) of the additional plugging protions in the open end portion on the inlet side, disposition length (depth) of the plugging portions and disposition length (depth) of the additional plugging protions in the open end portion on the outlet side, additional plugging density, additional plugging disposition form, highest temperature upon regeneration, and rupture PM amount of the obtained honeycomb catalyst bodies are shown in Table 1.

Table 1 shows the following. That is, in the case of Examples 1 to 14 and Examples A and B, the highest temperature is lowered by forming the additional plugging portion. However, in the case that the plugging portions and the additional plugging portions have the same disposition length (depth) as in Comparative Example 2, effect in increasing a PM accumulation amount where the DPF breaks was less as a result. The lowering of the highest temperature upon PM regeneration is considered to be caused because cells where PM is not accumulated are present by forming the additional plugging portions and combustion heat due to combustion of PM is absorbed in the vicinity thereof. The portion where the additional plugging portion is formed has lower temperature than the other portions, and stress is liable to concentrate on the portion. It is considered that effect in increasing a PM accumulation amount leading to rupture is reduced since stress concentration is generated continuously by making the disposition length (depth) the same between the plugging portions and the additional plugging portions. Also, in the case that cross sections in a direction perpendicular to the axial direction of the additional plugging portions are formed at random without forming a predetermined series of shape continuously as in Examples A and B, effect in increasing a PM accumulation amount where the DPF is broken is less. This is because, since generated heat upon combustion of carbon particulate matter and the like could not be dispersed by each region, rapid temperature rise could not be inhibited by suppressing chain reaction combustion due to heat generation. On the other hand, it is considered that, by changing disposition length (depth) between the plugging portions and the additional plugging portions, additional plugging density, and an additional plugging disposition form as in Examples 1 to 14, stress concentration can be dispersed, and thereby effect in improving a PM accumulation amount leading to rupture is increased.

**Table 1**

| Sort | Inlet side | | Outlet side | | Additional plugging density (%) | Highest temp. *upon* regeneration (°C) | Rupture PM amount (g/L) | Additional *plugging* disposition form* |
|---|---|---|---|---|---|---|---|---|
| | Plugging depth (mm) | Additional plugging depth (mm) | Plugging Depth (mm) | Additional plugging depth (mm) | | | | |
| Comp. Ex. 1 | 10 | None | 10 | None | 0 | 850 | 6.0 | - |
| Comp. Ex. 2 | 10 | 10 | 10 | None | 10 | 830 | 6.3 | Fig. 11 |
| Ex. A | 10 | 20 | 10 | None | 10 | 815 | 6.5 | Random |
| Ex. B | 10 | None | 10 | 20 | 35 | 810 | 6.5 | Random |
| Comp. Ex. 3 | 15 | None | 15 | None | 0 | 820 | 6.4 | --- |
| Example 1 | 10 | 20 | 10 | None | 10 | 770 | 8.0 | Fig. 11 |
| Example 2 | 10 | 100 | 10 | None | 10 | 750 | 8.5 | Fig. 11 |
| Example 3 | 10 | None | 10 | 20 | 3 | 800 | 8.5 | Fig. 13 |
| Example 4 | 10 | None | 10 | 20 | 10 | 760 | 8.0 | Fig. 10 |
| Example 5 | 10 | None | 10 | 20 | 35 | 770 | 7.5 | Fig. 6 |
| Example 6 | 10 | None | 10 | 20 | 45 | 780 | 7.5 | Fig. 6 |
| Example 7 | 10 | 100 | 10 | 100 | 5 | 780 | 8.0 | Fig. 8 |
| Example 8 | 2 | None | 2 | 80 | 1 | 800 | 7.0 | Fig. 13 |
| Example 9 | 2 | None | 2 | 80 | 1.5 | 795 | 7.1 | Fig. 13 |
| Example 10 | 2 | None | 2 | 80 | 2 | 790 | 7.5 | Fig. 13 |
| Example 11 | 3 | 16 | 2 | 40 | 10 | 785 | 7.5 | Fig. 8 |
| Example 12 | 5 | None | 10 | 15.5 | 20 | 770 | 7.6 | Fig. 12 |
| Example 13 | 10 | None | 10 | 120 | 45 | 720 | 9.0 | Fig. 6 |
| Example 14 | 15 | None | 15 | 100 | 40 | 735 | 8.8 | Fig. 6 |

| | | | | | | | | |
|---|---|---|---|---|---|---|---|---|
| * A disposition form of additional plugging is shown, and it does not mean production in completely the same shape as the figure. | | | | | | | | |

### (Examples 15 to 22)

The honeycomb catalyst bodies were produced in the same manner as in Example 1 except for plugging depth, plugging depth of the additional plugging, additional plugging density, additional plugging disposition form, and sectional shape of the cells. In addition, a sectional shape in the direction perpendicular to the axial direction of the cells is a shape obtained by combining a quadrangle and an octagon alternately as shown in Fig. 16. The area per cell of octagon was made larger than that of quadrangle, and the ratio of the area of the octagon to the area of the quadrangle was made 1.6. Disposition length (depth) of the plugging portions and disposition length (depth) of the additional plugging portions in the open end portion on the inlet side, disposition length (depth) of the plugging portions and disposition length (depth) of the additional plugging portions in the open end portion on the outlet side, additional plugging density, sectional shape in the direction perpendicular to the axial direction of the cells, highest temperature upon regeneration, rupture PM amount, additional plugging disposition form of each of the obtained honeycomb catalyst bodies, and additional plugging disposition form are shown in Table 2. Incidentally, an "additional plugging disposition form" means disposition form of additional plugging and does not mean production in completely the same shape as the figure.

From Table 2, good results could be obtained even by making the cross-sectional shape in the direction perpendicular to the axial direction to be the shape where quadrangles and octagons were combined alternately as shown in Fig. 16.

**Table 2**

| Sort | Inlet side | | Outlet side | | Additional plugging density (%) | Cross section of cells | | Highest temp. upon regeneration (°C) | Rupture PM amount (g/L) | Additional plugging disposition form* |
|---|---|---|---|---|---|---|---|---|---|---|
| | Plugging depth (mm) | Additional plugging depth (mm) | Plugging depth (mm) | Additional plugging depth (mm) | | Inlet side | Outlet side | | | |
| Example 15 | 10 | 20 | 10 | None | 10 | Octagon | Quadrangle | 760 | 8.2 | Fig. 11 |
| Example 16 | 10 | None | 10 | 20 | 3 | Octagon | Quadrangle | 800 | 8.5 | Fig. 13 |
| Example 17 | 10 | 100 | 10 | 100 | 5 | Octagon | Quadrangle | 760 | 8.2 | Fig. 8 |
| Example 18 | 10 | 100 | 10 | 100 | 5 | Quadrangle | Octagon | 760 | 8.2 | Fig. 8 |
| Example 19 | 3 | 16 | 2 | 40 | 10 | Quadrangle | Octagon | 790 | 7.4 | Fig. 8 |
| Example 20 | 10 | None | 10 | 120 | 45 | Quadrangle | Octagon | 735 | 8.8 | Fig. 6 |
| Example 21 | 10 | None | 10 | 120 | 45 | Octagon | Quadrangle | 730 | 8.9 | Fig. 6 |
| Example 22 | 15 | None | 15 | 100 | 40 | Octagon | Quadrangle | 730 | 8.8 | Fig. 6 |

| | | | | | | | | | | |
|---|---|---|---|---|---|---|---|---|---|---|
| * A disposition form of additional plugging is shown, and it does not mean production in completely the same shape as the figure. | | | | | | | | | | |

### Industrial Applicability

A honeycomb structure made by the production method of the present invention are effectively used in various kinds of industrial fields where an internal combustion engine, a boiler, or the like, is used and where particulate matter and harmful substances in exhaust gas cause problems, for example, in the automobile industry.

## Claims

1. A method of producing a honeycomb structure (1), wherein the honeycomb structure (1) comprises:
porous partition walls (3) disposed so as to form a plurality of cells (4) functioning as fluid passages of exhaust gas between two end faces (6a, 6b) and having a large number of pores, and
first plugging portions (7) disposed so as to alternately plug one of open end portions (5) of each of the cells on the two end faces;
wherein additional plugging portions (8) are further disposed in the open end portions of the cells, which open end portions are unplugged open end portions having no first plugging portion disposed therein, in such a manner that the additional plugging portions (8) stop inflow of a part of the exhaust gas to said open end portions having no first plugging portions disposed therein, and wherein the disposition length in an axial direction of the additional plugging portions (8) is different from that in the axial direction of the first plugging portions (7);
wherein the method comprises the steps of:
disposing a mask and/or a film having openings of a predetermined size on two end faces of a honeycomb formed body obtained by forming clay into a honeycomb shape or a honeycomb structure obtained by firing such a honeycomb formed body; and
filling independent materials into portions which become said first plugging portions (7) and said additional plugging portions (8) of the cells to form the first plugging portions (7) and the additional plugging portions (8);
the method being **characterized in that** the mask and/or the film have/has openings whose sizes are different between the openings corresponding with the additional plugging portions (8) and the openings corresponding with the first plugging portions (7).

2. The method according to Claim 1, wherein the openings in the mask and/or the film corresponding with the additional plugging portions (8) are larger than the openings corresponding with the first plugging portions (7).

3. The method according to Claim 1 or 2, wherein the independent materials are filled into the first plugging portions (7) and the additional plugging portions (8) by a press-in technique.

4. The method according to Claim 1 or 2, wherein the independent materials are filled into the first plugging portions (7) and the additional plugging portions (8) by a suction technique.

5. The method according to any one of Claims 1 to 4, wherein a material which becomes the first plugging portions (7) and a material which becomes the additional plugging portions (8) are separately filled in the cells with each being filled one or more times.

6. The method according to any one of Claims 1 to 5, wherein firing is performed after the first plugging portions (7) and the additional plugging portions (8) are formed.

## Patentansprüche

1. Verfahren zur Herstellung einer Wabenstruktur (1), worin die Wabenstruktur (1) Folgendes umfasst:
poröse Trennwände (3), die so angeordnet sind, dass sie eine Vielzahl von Zellen (4) bilden, die als Fluidkanäle von Abgas zwischen zwei Endflächen (6a, 6b) wirken und eine große Anzahl von Poren aufweisen, und
erste Verschlussabschnitte (7), die so angeordnet sind, dass sie abwechselnd einen von offenen Endabschnitten (5) von jeder der Zellen auf den zwei Endflächen verschließen;
worin zusätzliche Verschlussabschnitte (8) ferner in den offenen Endabschnitten der Zellen angeordnet sind, wobei die offenen Endabschnitte unverschlossene offenen Endabschnitte sind, die keinen ersten Verschlussabschnitt darin angeordnet haben, derart, dass die zusätzlichen Verschlussabschnitte (8) ein Einströmen eines Teils des Abgases in die offenen Endabschnitte, die keine Verschlussabschnitte darin angeordnet haben, unterbinden, und worin sich die Anordnungslänge in eine axiale Richtung der zusätzlichen Verschlussabschnitte (8) von derjenigen in die axiale Richtung der ersten Verschlussabschnitte (7) unterscheidet;
worin das Verfahren folgende Schritte umfasst:
Anordnen einer Maske und/oder eines Films, die Öffnungen einer vorbestimmten Größe auf zwei Endflächen eines wabenförmig gebildeten Körpers aufweisen, der durch das Formen von Ton in eine Wabenform erzielt wird, oder einer Wabenstruktur, die durch das Brennen eines solchen wabenförmig ausgebildeten Körpers erzielt wird, und
Füllen von unabhängigen Materialien in Abschnitte, welche die ersten Verschlussabschnitte (7) und die zusätzlichen Verschlussabschnitte (8) der Zellen werden, um die ersten Verschlussabschnitte (7) und die zusätzlichen Verschlussabschnitte (8) auszubilden;
wobei das Verfahren **dadurch gekennzeichnet ist, dass** die Maske und/oder der Film Öffnungen aufweisen/aufweist, deren Größen zwischen den Öffnungen, die den zusätzlichen Verschlussabschnitten (8) entsprechen, und den Öffnungen, die den ersten Verschlussabschnitten (7) entsprechen, unterschiedlich sind.

2. Verfahren gemäß Anspruch 1, worin die Öffnungen in der Maske und/oder im Film, die den zusätzlichen Verschlussabschnitten (8) entsprechen, größer als die Öffnungen, die den ersten Verschlussabschnitten (7) entsprechen, sind.

3. Verfahren gemäß Anspruch 1 oder 2, worin die unabhängigen Materialien in die ersten Verschlussabschnitte (7) und in die zusätzlichen Verschlussabschnitte (8) durch eine Einpress-Verfahrenstechnik gefüllt werden.

4. Verfahren gemäß Anspruch 1 oder 2, worin die unabhängigen Materialien in die ersten Verschlussabschnitte (7) und in die zusätzlichen Verschlussabschnitte (8) durch eine Saug-Verfahrenstechnik gefüllt werden.

5. Verfahren gemäß einem der Ansprüche 1 bis 4, worin ein Material, das zu den ersten Verschlussabschnitten (7) wird, und ein Material, das zu den zusätzlichen Verschlussabschnitten (8) wird, voneinander unabhängig in die Zellen gefüllt werden, wobei jede ein- oder mehrmals gefüllt wird.

6. Verfahren gemäß einem der Ansprüche 1 bis 5, worin das Brennen nach dem Ausbilden der ersten Verschlussabschnitte (7) und der zusätzlichen Verschlussabschnitte (8) ausgeführt wird.

## Revendications

1. Procédé de production d'une structure en nid d'abeilles (1), dans lequel la structure en nid d'abeilles (1) comprend:
des parois de séparation poreuses (3) disposées de manière à former plusieurs cellules (4) agissant comme des passages de fluide de gaz d'échappement entre deux faces d'extrémité (6a, 6b) et ayant un grand nombre de pores, et
des premières parties de bouchage (7) disposées de manière à boucher alternativement l'une des parties d'extrémité ouvertes (5) de chacune des cellules sur les deux faces d'extrémité;
dans lequel des parties de bouchage supplémentaires (8) sont en outre disposées dans les parties d'extrémité ouvertes des cellules, lesquelles parties d'extrémité ouvertes sont des parties d'extrémité ouvertes non bouchées n'ayant pas de première partie de bouchage disposée dans celles-ci, de telle sorte que les parties de bouchage supplémentaires (8) arrêtent un écoulement entrant d'une partie des gaz d'échappement vers les parties d'extrémité ouvertes ne possédant pas de première partie de bouchage disposées dans celles-ci, et dans lequel la longueur de la disposition dans une direction axiale des parties de bouchage supplémentaires (8) est différente de celle dans la direction axiale des premières parties de bouchage (7)°;
dans lequel le procédé comprend les étapes consistant à:
disposer un masque et/ou un film ayant des ouvertures d'une dimension prédéterminée sur les deux faces d'extrémité d'un corps en nid d'abeilles obtenu par mise en forme d'argile dans une forme en nid d'abeilles ou une structure en nid d'abeilles obtenue par cuisson d'un tel corps formé en nid d'abeilles ; et
remplir des matériaux indépendants dans des parties qui deviennent les premières parties de bouchage (7) et les parties supplémentaires de bouchage (8) des cellules pour former les premières parties de bouchage (7) et les parties de bouchage supplémentaires (8) ; le procédé étant **caractérisé en ce que** le masque et/ou le film présente/présentent des ouvertures dont les dimensions sont différentes entre les ouvertures correspondant aux parties de bouchage supplémentaires (8) et les ouvertures correspondant aux premières parties de bouchage (7).

2. Procédé selon la revendication 1, dans lequel les ouvertures dans le masque et/ou le film correspondant aux parties de bouchage supplémentaires (8) sont plus grandes que les ouvertures correspondant aux premières parties de bouchage (7)

3. Procédé selon les revendications 1 ou 2, dans lequel les matériaux indépendants sont introduits dans les premières parties de bouchage (7) et les parties de bouchage supplémentaires (8) par une technique d'emmanchement.

4. Procédé selon les revendications 1 ou 2, dans lequel les matériaux indépendants sont introduits dans les premières parties de bouchage (7) et les parties de bouchage supplémentaires (8) par une technique d'aspiration.

5. Procédé selon l'une quelconque des revendications 1 à 4, dans lequel un matériau qui devient les premières parties de bouchage (7) et un matériau qui devient les parties de bouchage supplémentaires (8) sont introduits séparément dans les cellules, chacun étant introduit une ou plusieurs fois.

6. Procédé selon l'une quelconque des revendications 1 à 5, dans lequel la cuisson est effectuée après que les premières parties de bouchage (7) et les parties de bouchage supplémentaires (8) ont été formées.
